**Europäisches Patentamt**

**European Patent Office** (11) Publication number: **0 102 455**

**Office européen des brevets** **A2**

(19)

## (12) EUROPEAN PATENT APPLICATION

(21) Application number: **83105215.4**

(22) Date of filing: **26.05.83**

(51) Int. Cl.³: **F 16 H 25/22**

(30) Priority: **09.06.82 SE 8203566**
**24.09.82 SE 8205457**

(43) Date of publication of application:
**14.03.84 Bulletin 84/11**

(84) Designated Contracting States:
**AT BE CH DE FR GB IT LI LU NL SE**

(71) Applicant: **Häkansson, Bengt Erik William**
**Ekgatan 8**
**S-662 00 Amäl(SE)**

(72) Inventor: **Häkansson, Bengt Erik William**
**Ekgatan 8**
**S-662 00 Amäl(SE)**

(74) Representative: **Hynell, Magnus**
**I o M Hynell Patent-Tjänst Box 236**
**S-683 02 Hagfors(SE)**

(54) Machine element.

(57) A mechanism comprising a male and a female portion with roller bearings to reduce the friction between the male and the female portion is provided with grooves with rolling bodies located between the male and female portion (1 and 2 respectively) and enclosed in at least one blind groove (6, 6', 6") in the female portion (1, 1', 1") extending between two fixed end stops (7, 11), all with the objective that when the male and female portions are made to move relative to each other the rolling bodies retain their position in the blind groove, sliding and rolling against the groove surfaces.

FIG. 3

EP 0 102 455 A2

# MACHINE ELEMENT

## TECHNICAL FIELD

The invention relates to machine elements and more particularly relates to a mechanism comprising a male and a female portion with roller bearing in order to reduce the friction between the male and female portion, where the male and female portion are provided with grooves for the rolling bodies. The invention relates especially to a screw movement mechanism in the form of a screw and nut arrangement with roller bearing, where the screw and the nut or the corresponding female portion are provided with spirally-twisted (helical) grooves.

## BACKGROUND

Ball-bearing screws are already known. With these known screw movement mechanisms the ball-bearing balls circulate in hardened grooves formed by concave spiral (helical) grooves in the screw and nut. All forces between the screw and the nut are transmitted by the balls which bring about the sole direct contact between both these elements. When the screw and nut rotate relative to each other so that the nut is displaced axially along the length of the screw, the balls are gradually displaced from one end of the nut and are conveyed through a tubular return pipe to the opposite end of the nut. Thus the balls can circulate continuously in the arrangement.

With these known arrangements it is possible to reduce the friction between the screw and nut quite considerably, in that the sliding friction of conventional screw mechanisms is replaced by rolling friction between the balls on one hand and the nut and screw on the other hand. Even so the elements have been employed only on a limited scale. The reason for this can be that they are relatively complicated and consequently expensive. Hence they have been employed only in such difficult applications where the high costs can or must be tolerated.

DESCRIPTION OF THE INVENTION

The aim of the present invention is to provide a mechanism of the type described in the preamble which has a much simpler design than ball-bearing screws and corresponding elements available now, but which even so offers such a low resistance when the male and female portions are made to move relative to each other that the element is fully comparable with the considerably more expensive ball-bearing screws and corresponding elements which have hitherto been developed. Consequently the range of application of the element can be extended quite considerably. As an example of possible spheres of application mention can be made of lifting jacks, hoist arrangements for trucks, vehicles for disabled persons, hydraulic tables and hospital equipment, actuating devices for hydraulic valves, the foodstuffs industry, actuating devices for robots, for loading devices, for adjustable mounting arrangements for safety belts in motor cars, and actuating devices within the paper industry. These spheres of application represent only examples and by no means restrict the scope of the invention. Generally it can be stated that the invention can be employed where it is required that two components in an element are to perform an axial movement relative to each other, especially if it is required that a rotary movement on the part of a nut or the like be changed to an axial movement on the part of a screw or the like.

The invention is characterised by the rolling bodies being arranged between the male and female portions, enclosed in at least one blind groove in the female portion extending between two fixed end stops, all with the aim of ensuring that when the male and female portions are made to move relative to each other the rolling bodies remain in position in the blind groove, sliding and rolling against the groove surfaces. One embodiment is especially characterised in that it comprises a screw movement mechanism in which the female portion comprises a nut or the like and the male portion comprises a screw or the like, and that the said groove here extends in spiral fashion around the inside of the screw or nut respectively, and where the blind groove extends for at least one turn around the inside of the nut. In its basic form the rolling bodies occupy the entire extent of the blind groove between the end stops. However, the element will still function even if one or a pair of rolling bodies are removed. No study has been made of the way in which the element would function if a considerable portion of the blind groove is not occupied by rolling bodies. Nevertheless it can be assumed that a preferred embodiment of the invention should be characterised by at least essentially the entire groove being occupied by rolling bodies.

In accordance with a preferred embodiment the rolling bodies consist of balls. However rolling bodies with a shape other than purely spherical are feasible. For example the rolling bodies can consist of more or less cylindrical bodies with appropriately domed ends. Lens-shaped bodies are also feasible, these having the advantage that the space requirement in the axial direction can be reduced when the groove is orientated in spiral fashion. In accordance with a preferred embodiment the two end stops are arranged at an axial distance from both end surfaces of the female portion. The sections of the female portion which are located between the end stops and the end surfaces can here function as guides as a result of sliding contact between the inside of the female portion outside the blind groove and the upper side of the bars between adjacent groove turns in the male portion. It is also possible to imagine the groove in the female portion extending past the end stop, whereby the surface of the bars between the adjacent groove turns of the female portion outside the end stops which faces the male portion functions as guide surface. In this case the end stops then have the shape of screws, pins or corresponding elements which by means of a through hole in the female portion, provided for each end stop, extends externally through the wall of the female portion into the groove. In this case the end stop should normally have a cylindrical convex shape. Otherwise the end stops have for example a plane spherical-concave or cylindrical-concave surface facing the blind groove. On the other hand the end stops must not be shaped such that the adjacent ball or corresponding rolling body may wedge oneself in between the end stop and the female portion or between the end stop and the male portion. Instead the end stops should be designed such that the contact with the ball occurs in a point coinciding with the line which is defined by the mutual contact points of the balls, which line normally is the centre line of the blind groove.

In a preferred embodiment the blind groove in combination with the groove in the male portion has a circular cross-section with the same radius as the rolling bodies which are in the form of balls. However it is possible to envisage that the blind groove in combination with the groove in the male portion instead has a non-circular shape, and that the balls make contact with the groove surfaces along tangent lines which extend along the grooves. For example the said combined shape can comprise a polygonal shape or combinations of a circular segment and a polygon. In accordance with the embodiment selected the blind groove and the groove in the male portion furthermore have the same cross-section, but the opposite case is also feasible. In accordance with an alternative preferred embodiment the blind groove thus has a cross-section in the form of a circular segment which is larger than a semi-circle, whilst the groove in the male portion occupies only a small portion of the same circle.

The mechanism of the invention can also be provided with means or members for locking the male and female portions respectively in various positions relative to each other. For example the female portion can be provided with hinged locking jaws. Another method locking the two members is by means of a stop or clamping screw or pin which from the exterior is penetrated through the female portion till it hits one of the rolling bodies or, more suitably, so that it penetrates between two rolling bodies wherein the rolling bodies are pressed apart until the end-balls or corresponding rolling bodies at the ends are firmly pressed against the end stops. It is a prerequisite in the latter case that the total play between the rolling bodies is not greater than the diameter of the stop screw or stop pin.

The female portion, and of course also the male portion, can be manufactured in any conventional way by normal machining but also manufacturing methods comprising powder compacting, punching and forming, forging, drop forging, etc, can be used. The female portion can also be made from two or more parts which are united to each other. Nor is the mechanism restricted to the use of any particular material. By way of example the mechanism can be made of various metals and plastic materials as well as of combinations of two or more materials.

Further characteristics and advantages of the present invention will be evident from the patent claims which follow and the following description of some preferred embodiments.

BRIEF DESCRIPTION OF DRAWINGS

In the following description of preferred embodiments reference will be made to the appended drawings in which

Fig. 1    gives an end view of a screw movement mechanism in accordance with the invention,

Fig. 2    shows a section II-II in Fig. 1,

Fig. 3    shows a section III-III in Fig. '2, in accordance with a first preferred embodiment,

Fig. 4    shows the same section as in Fig. 3 but in accordance with a modified preferred embodiment and

Fig. 5    illustrates a further modified embodiment.

BEST MODE OF CARRYING OUT THE INVENTION

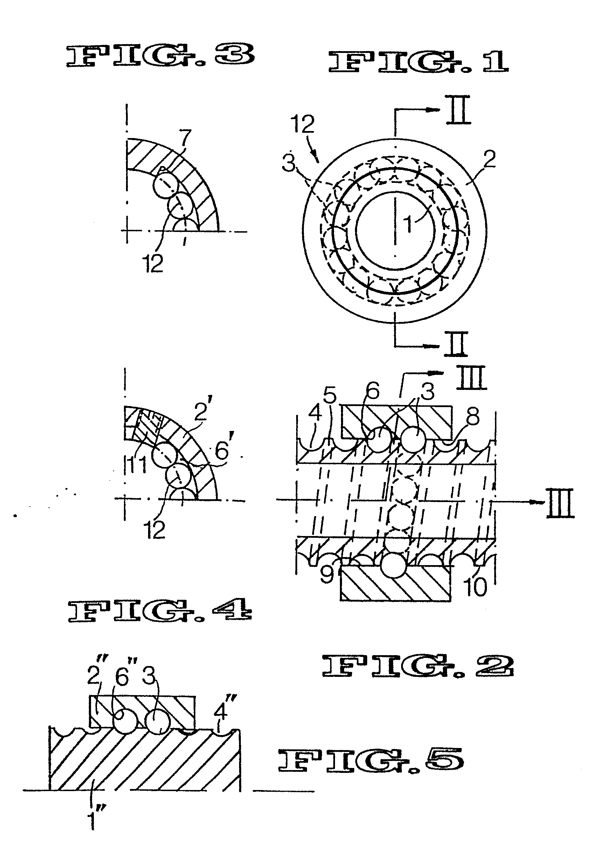

The screw movement mechanism is designated generally in the diagrams by the number 12. The mechanism consists of a tubular screw 1, a nut 2 and a number of ball-bearing balls 3. The screw 1 is provided with threads formed by a groove 4 which extends in spiral fashion around the screw together with bars 5 between adjacent groove turns. On its inside the nut 3 is provided with a groove 6 with a corresponding thread pitch. The groove 4 in the screw and the groove 6 in the nut have the same semi circular-shaped cross-section so that the balls 3 can fit with tolerance into the spirally twisted, tubular space formed between the screw 1 and the nut 2, as shown in Fig. 2.

In accordance with the embodiment illustrated in Fig. 2 and 3 the groove 6 in the nut 2 extends only roughly 1½ turns around the inner circumference of the nut. At the two ends of this groove portion, which can be regarded as forming a blind groove, the groove 6 is terminated transversely by means of a transverse wall 7, Fig. 3, so that the end-ball abuts the wall 7 in a point which coincides with the centre line 12 of the balls, i.e. the line which coincides with the mutual contact points of the balls in the blind groove. Herein it is avoided that the end-balls wedge oneselves in between the end stops and the nut or the screw. As shown in the embodiment the blind groove 6 which is closed off in this manner at both ends is filled with balls 7. The absolutely smooth cylindrical portions 8 and 9 of nut 2 which are located outside the end stop 7 function in accordance with the embodiment as guides, in that they slide against the outer surfaces 10 of the bars 5 of the screw between adjacent groove turns.

In the embodiment illustrated in Fig. 4 the groove in nut 2' extends right out to the end surfaces of the nut. In this case a pair of screws 11 is screwed through the wall of the nut 2' so as to form end stops in the same way as the end stop 7 in the previous embodiment, so that the end-screws 11 abut the end-balls in contact points coinciding with the centre line 12. In this case also a blind groove 6' which is closed off at both ends is thus formed which can be filled with balls 3.

When the screw 1 is rotated around its centre axis the balls 3 slide and roll against the grooves 4 and 6 or 6' without leaving their positions in the blind groove relative to the nut. As mentioned in the preamble however it is possible to envisage the blind groove not being completely filled with balls 3. In such a case rolling can take place without sliding, until the balls have moved forwards to a new position from one end of the groove to the other, i.e. until one front ball impacts against a front end stop.

With the embodiments illustrated hitherto the blind groove 6 and the groove 4 in the screw have the same cross-section. Fig. 5 illustrates that other forms are also possible. Thus the blind groove 6'' can be designed so that this has a cross-section which is greater than a half circular segment. In this case groove 4'' in the screw 1'' is comparatively shallower and has a cross-section in the form of a circular segment which forms the remainder of a circle having the same radius as the balls 3. The embodiment has the advantage that the balls 3 cannot tumble out of the nut 2'', even if this is unscrewed completely from screw 1''.

CLAIMS

1. Mechanism comprising a male and a female portion with roller bearing to reduce the friction between the male and the female portion, where the male and the female portions are provided with grooves for the rolling bodies, c h a r a c t e r i s e d in that the rolling bodies (3) are located between the male and female portion ( 1 and 2 respectively) and locked into at least one blind groove (6, 6', 6'') in the female portion extending between two fixed end stops (7, 11), with the objective that when the male and female portions are made to move relative to each other the rolling bodies remain in place in the blind groove, sliding and rolling against the groove surfaces.

2. Mechanism as in claim 1, c h a r a c t e r i s e d in that it comprises a screw movement mechanism in which the female portion comprises a nut or the like and the male portion comprises a screw or the like, and that said grooves extend in spiral fashion around the inside of the screw or nut respectively, and where the blind groove extends for at least one turn around the inside of the nut.

3. Mechanism as in claims 1 or 2, c h a r a c t e r i s e d by the rolling bodies essentially occupying the whole of the blind groove between the end stops.

4. Mechanism in accordance with any of claims 1-3, c h a r a c - t e r i s e d in that both end stops of the blind groove are arranged at an axial distance from both end surfaces of the female portion and that the inside of the female portion on either side of both end stops functions as a guide in respect of the male portion.

5. Mechanism in accordance with any of claims 1-4, c h a r a c - t e r i s e d in that at least one end and preferably both ends of the groove in the female portion extend past the said end stops which comprise screws (11), pins or the like and which by means of through holes in the female portion, one for each end stop, extend externally through the walls of the female portion into the groove.

6. Mechanism in accordance with any of claims 1-5, c h a r a c - t e r i s e d in that the said end stops have plane, spherical-concave, cylindrical-convex or cylindrical-concave shape.

7. Mechanism in accordance with any of claims 1-6, c h a r a c - t e r i s e d by the rolling bodies comprising spherical balls.

8. Mechanism as in claim 1, c h a r a c t e r i s e d in that the blind groove in combination with the groove in the male portion has circular cross-section with the same radius as the balls.

9. Mechanism in accordance with any of claims 1-8, c h a r a c - t e r i s e d in that the blind groove in combination with the groove in the male portion has non-circular shape, but that the rolling bodies touch the groove surfaces along tangent lines which extend along the grooves.

10. Mechanism in accordance with any of claims 1-9, c h a r a c - t e r i s e d in that the blind groove and the groove in the male portion have the same cross-section.

11. Mechanism in accordance with any of claims 1-9, c h a r a c - t e r i s e d in that the blind groove (6'') and the groove (4'') in the male portion (1'') have different cross-sections.

12. Mechanism in accordance with any of claims 1-11, c h a r a c - t e r i s e d in that the rolling bodies at the ends of the blind groove abut the end stops in points coinciding with the line defined by the mutual contact points of the rolling bodies.

# FIG.3

# FIG.1

# FIG.4

# FIG.2

# FIG.5